# EUROPEAN PATENT APPLICATION

(11) **EP 3 653 417 A1**
(43) Date of publication of application: **20.05.2020**
(21) Application number: 18205936.0
(22) Date of filing: 13.11.2018
(51) Int. Cl.: B60J 1/08, B60R 21/0136

(54) **EMERGENCY SYSTEM IN A VEHICLE**

(71) Applicant: Ningbo Geely Automobile Research & Development Co. Ltd., Hangzhou Bay New District Ningbo 315336 (CN)
(72) Inventor: JOHANSSON, Jonathan, 417 14 GÖTEBORG (SE); NILSSON, Magnus, 448 37 FLODA (SE)
(74) Representative: Zacco Sweden AB

(57) **Abstract**

A method for breaking a vehicle window glass (1) in an emergency situation comprises monitoring an operational state of the vehicle, wherein a vehicle security system is in a standby mode when said operational state of the vehicle corresponds to a first state and wherein the vehicle security system is in an emergency mode when said operational state of the vehicle corresponds to a second state. The method further comprises activating said second state when detecting one of several emergency conditions from a group comprising upside down position of vehicle with positional sensor, crash with a crash sensor, and water immersion with a water immersion detection sensor. When said operational state corresponds to said second state the method further comprises the vehicle security system monitoring changes in stress on vehicle windows, and wherein if a change in stress monitored is repeated rhythmically and the change in stress in the glass corresponds to a person banging on the window with a hand or a foot, the vehicle security system activates a glass breaking system (2) for breaking the window glass for which the changes in stress are detected.

## Description

### TECHNICAL FIELD

The present invention relates to a method for breaking a vehicle window glass and a vehicle window glass breaking system.

### BACKGROUND

In case of a vehicle crash the recommendation is that side windows shall be closed. There are systems in production that closes windows when a crash is imminent. However, for opening them again there are just the standard switches or possibly an emergency hammer.

When a vehicle has crashed the windows may need to be opened to provide an exit. A typical situation might be when the car is under water or upside down. The standard way of opening windows is not always the best. A panic situation might occur and the switches could be hard to find or the switches may be hard to reach due to the vehicle being for instance upside down. Further, the electricity for opening the windows may be out so that the windows need to be broken.

### SUMMARY

It is an object of the present invention to provide a method and a system for exiting a vehicle that is in an emergency state without the need for the occupant or occupants to use any tools.

According to a first aspect of the present disclosure a method for breaking a vehicle window glass in an emergency situation is provided. The method comprises monitoring an operational state of the vehicle, wherein a vehicle security system is in a standby mode when said operational state of the vehicle corresponds to a first state and wherein the vehicle security system is in an emergency mode when said operational state of the vehicle corresponds to a second state. The method further comprises activating said second state when detecting one of several emergency conditions from a group comprising upside down position of vehicle with positional sensor, crash with a crash sensor, and water immersion with a water immersion detection sensor. When said operational state corresponds to said second state the method further comprises the vehicle security system monitoring changes in stress on vehicle windows and wherein if a change in stress monitored is repeated rhythmically and the change in stress in the glass corresponds to a person banging on the window with a hand or a foot, the vehicle security system activates a glass breaking system for breaking the window for which the changes in stress are detected.

The window seals are equipped with pressure sensors and the sensors are connected to the Passive Safety ECU. When the car enters emergency mode and has stopped moving, the ECU starts monitoring the sensors for rhythmic pressure peaks, indicating that the windows are being hit. The ECU activates the glass breaking system for breaking the window for which the changes in stress are monitored.

According to another aspect of the present disclosure the vehicle security system further activates the glass breaking system of adjacent windows upon activating the glass breaking system of said first window.

For avoiding unintentional activation of the glass breaking system, the method according to an further aspect of the disclosure the vehicle glass breaking system is activated if the change in stress monitored is repeated rhythmically and each change monitored is within one second from the previous change. The time interval could also be changed to, for instance, two or five seconds.

According to yet another aspect of the present disclosure, the method comprises that the vehicle security system activates the glass breaking system if said changes in stress are repeated three times or more.

Also, the number of repetitions could be changed. For instance, in some cases it might be sensible to only have one repetition (i.e. in total two monitored stress changes) of the changes in stress in order for the glass breaking system to be activated. Increasing the number of repetitions needed could be an option if unintentional activation of the glass breaking system should be an issue.

According to another aspect of the present disclosure a vehicle window glass breaking system is provided that comprises a vehicle security system connected to stress sensors arranged at each side window such that they monitor changes in stress in the side window glasses. The system further comprises a breaking device for each side window with a sensor connected to and controlled by the vehicle security system.

According to one alternative aspect of the vehicle window breaking system the breaking device is a spring charged pricker. The pricker is typically a steel tip or similar in order to be able to break a window.

According to a second alternative of the vehicle window breaking system the breaking device is instead a pyrotechnically charged pricker. For some cases a pyrotechnically charged pricker might be more reliable.

The vehicle window glass breaking system is according to yet another aspect such that the breaking devices are arranged in the doors of the vehicle for the opening windows. Generally, for windows that can be opened a lower part of the window will always be inside the vehicle door and the breaking device is easier to add to an already existing design of a door with an opening window.

Further features of, and advantages with, the present invention will become apparent when studying the appended claims and the following description. The skilled person realize that different features of the present invention may be combined to create embodiments other than those described in the following, without departing from the scope of the present invention.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:

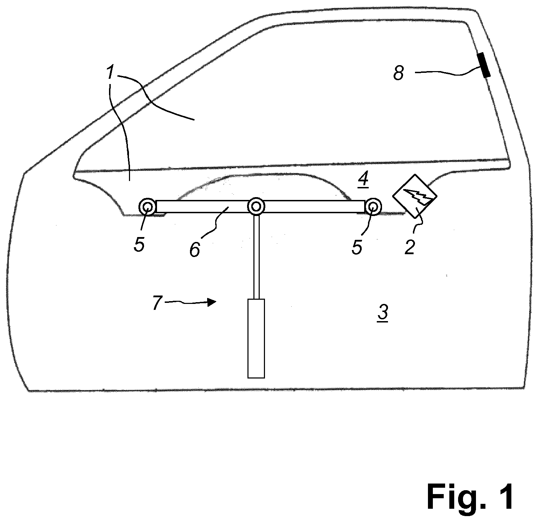

Figure 1 is a schematic side view of a vehicle door in section.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference character refer to like elements throughout the description.

With reference to figure 1 a schematic side view of a vehicle door 3 in section is shown. The window glass 1 is held on its lower side 4 at two points 5 and interconnected with a rod 6. The window glass 1 is movable up and down utilizing an actuating mechanism 7 connected to the rod 6.

A glass breaking device 2 is arranged inside the door 3, i.e. not visible from either side of the door 3.

Thus, the method of the present disclosure for breaking a vehicle window glass 1 in an emergency situation comprises monitoring an operational state of the vehicle. A vehicle security system is in a standby mode when said operational state of the vehicle corresponds to a first state, wherein the vehicle security system is in an emergency mode when said operational state of the vehicle corresponds to a second state. Said second state is activated when one of several emergency conditions from a group comprising upside down position of vehicle with positional sensor, crash with a crash sensor, and water immersion with a water immersion detection sensor is detected. When said operational state corresponds to said second state the method further comprises the vehicle security system monitoring changes in stress on vehicle windows, and wherein if a change in stress monitored is repeated rhythmically and the change in stress in the glass corresponds to a person banging on the window with a hand or a foot, the vehicle security system activates the glass breaking system for breaking the window glass 1 for which the changes in stress are detected.

The vehicle window glass breaking system comprises a vehicle security system connected to stress sensors 8 arranged at each side window such that they monitor changes in stress in the side window glasses 1. The system further comprises a breaking device 2 for each side window with a sensor connected to and controlled by the vehicle security system.

The breaking device 2 is either a spring charged pricker or a pyrotechnically charged pricker. When the breaking device 2 is activated the pricker hits the window glass making the entire window glass 1 crackle and fall apart.

It is to be understood that the present invention is not limited to the embodiments described above and illustrated in the drawings; rather, the skilled person will recognize that many changes and modifications may be made within the scope of the appended claims. For example, there is at least one stress sensor for each window. Furthermore, the method and system could be implemented for non-opening windows wherein instead a part of the window glass is preferably extended beyond the visible area such that the breaking device can remain not visible.

## Claims

1. A method for breaking a vehicle window glass (1) in an emergency situation, the method comprising:
monitoring an operational state of the vehicle, wherein a vehicle security system is in a standby mode when said operational state of the vehicle corresponds to a first state, wherein the vehicle security system is in an emergency mode when said operational state of the vehicle corresponds to a second state,
activating said second state when detecting one of several emergency conditions from a group comprising upside down position of vehicle with positional sensor, crash with a crash sensor, and water immersion with a water immersion detection sensor,
and wherein when said operational state corresponds to said second state the method further comprises:
the vehicle security system monitoring changes in stress on vehicle windows,
and wherein if a change in stress monitored is repeated rhythmically and the change in stress in the glass corresponds to a person banging on the window with a hand or a foot,
the vehicle security system activates a glass breaking system for breaking the window glass (1) for which the changes in stress are detected.

2. The method for breaking a vehicle window glass (1) according to claim 1,
wherein the vehicle security system further activates the glass breaking system of adjacent windows upon activating the glass breaking system of said first window.

3. The method for breaking a vehicle window glass (1) according to any of the preceding claims, wherein the vehicle glass breaking system is activated if the change in stress monitored is repeated rhythmically and each change monitored is within one second from the previous change.

4. The method for breaking a vehicle window glass (1) according to any of the preceding claims, wherein vehicle security system activates the glass breaking system if said changes in stress are repeated three times or more.

5. A vehicle window glass breaking system,
**characterized in**
**that** it comprises a vehicle security system connected to stress sensors (8) arranged at each side window such that they monitor changes in stress in the side window glasses (1), the system further comprises a breaking device (2) for each side window with a sensor (8) connected to and controlled by the vehicle security system.

6. The vehicle window glass breaking system according to claim 5, wherein the breaking device (2) is a spring charged pricker.

7. The vehicle window glass breaking system according to claim 5, wherein the breaking device (2) is a pyrotechnically charged pricker.

8. The vehicle window glass breaking system according to any of the claims 5 to 7, wherein the breaking devices (2) are arranged in the doors (3) of the vehicle for the opening windows.
